# FASCICULE DE BREVET EUROPEEN

(11) **EP 4 426 569 B1**
(45) Date de publication et mention de la délivrance du brevet: **22.04.2026**
(21) Numéro de dépôt: 22813657.8
(22) Date de dépôt: 26.10.2022
(51) Int. Cl.: B60C 11/03, B60C 11/12

(54) **PNEUMATIQUE POUR UN VEHICULE POIDS LOURD AVEC BANDE DE ROULEMENT A SCULPTURE COMPLEXE**
SCHWERLASTFAHRZEUGREIFEN MIT KOMPLEXEM LAUFFLÄCHENPROFIL
HEAVY GOODS VEHICLE TYRE WITH COMPLEX TREAD PATTERN

(30) Priorité: 04.11.2021 FR 2111728
(43) Date de publication de la demande: 11.09.2024
(73) Titulaire: COMPAGNIE GENERALE DES ETABLISSEMENTS MICHELIN, 63000 Clermont-Ferrand (FR)
(72) Inventeur: ROBIN, Xavier, 63040 Clermont-Ferrand Cedex 9 (FR); BARDIN, Damien, 63040 Clermont-Ferrand Cedex 9 (FR); LARREGAIN, Arnaud, 63040 Clermont-Ferrand Cedex 9 (FR); KRAJEWSKA, Magdalena, 63040 Clermont-Ferrand Cedex 9 (FR)
(74) Mandataire: M.F.P. Michelin
(86) Numéro de dépôt international: PCT/FR2022/052031
(87) Numéro de publication internationale: WO 2023/079231

(56) Documents cités:
- EP-A2- 0 255 815
- FR-A1- 3 099 414
- US-S- D 769 796
- US-S- D 863 213

## Description

La présente invention a pour objet un pneumatique pour un véhicule poids lourd et concerne sa bande de roulement, comprenant plus particulièrement des découpures complexes et évolutives débouchant de façon discontinue, à intervalles réguliers ou non, sur la surface de roulement à l'état neuf du pneumatique.

Une bande de roulement, constituée par au moins un matériau à base de caoutchouc, est la partie périphérique du pneumatique, destinée à être usée lors de son entrée en contact avec un sol par l'intermédiaire d'une surface de roulement et à adhérer au sol. Elle comprend généralement une sculpture, constituée par des découpures séparant des éléments en relief.

Par définition, la direction circonférentielle ou longitudinale est la direction de rotation du pneumatique, la direction axiale ou transversale est la direction parallèle à l'axe de rotation du pneumatique et la direction radiale est une direction perpendiculaire à l'axe de rotation du pneumatique.

Toute découpure de la bande de roulement, ayant une ligne moyenne non nécessairement rectiligne, c'est-à-dire pouvant être ondulée ou en zigzag, est circonférentielle, transversale ou oblique. Par convention une découpure est dite circonférentielle, lorsque sa ligne moyenne a une direction moyenne sensiblement circonférentielle, c'est-à-dire formant, avec la direction circonférentielle, un angle moyen inférieur à 30°. Une découpure est dite transversale, lorsque sa ligne moyenne a une direction moyenne sensiblement transversale, c'est-à-dire formant, avec la direction circonférentielle, un angle moyen au moins égal à 60°. Une découpure est dite oblique, lorsque sa ligne moyenne a une direction moyenne sensiblement oblique, c'est-à-dire forme, avec la direction circonférentielle, un angle moyen compris entre 30° et 60°.

De façon connue, les conditions de roulage par temps de pluie d'un véhicule, et plus particulièrement celles d'un véhicule poids lourd, requièrent une évacuation rapide de l'eau présente dans la surface de contact entre la bande de roulement et la chaussée. Cette évacuation permet d'assurer un contact direct du matériau constituant la bande de roulement avec cette chaussée par l'intermédiaire de la surface de roulement. L'eau qui n'est pas repoussée vers l'avant ou les côtés du pneumatique s'écoule ou est captée en partie dans les découpures formées dans la bande de roulement. L'évacuation de l'eau est assurée par les découpures qui forment un réseau d'écoulement de fluide qui doit être efficace pendant toute la durée d'utilisation du pneumatique, depuis son état neuf jusqu'à son état d'usure maximal. L'état d'usure maximal, fixé par la réglementation en vigueur, est l'état d'usure à partir duquel le pneumatique doit être retiré du véhicule pour des raisons de sécurité.

Généralement, les découpures permettant l'évacuation de l'eau sont essentiellement des découpures larges appelées rainures. Une rainure a une largeur telle que les parois de matière en vis-à-vis la délimitant n'entrent pas en contact l'une avec l'autre, lors du passage de la bande de roulement dans la surface de contact, lorsque le pneumatique est soumis à des conditions de gonflage et de charge recommandées telles que définies notamment par les normes européennes de la « European Tyre and Rim Technical Organization » (Organisation technique européenne du pneu et de la roue) ou « E.T.R.T.O » dans son « Standards Manual 2020 - Commercial Vehicle Tyres » (Manuel de normes 2020 - Pneus pour véhicules commerciaux). Les déformations en compression et en cisaillement des éléments en relief délimitant la rainure conditionnent les pressions dans le contact avec le sol et donc l'usure. De plus ces déformations, en générant des pertes hystérétiques dans le matériau de la bande de roulement, impactent la résistance au roulement, et donc la consommation de carburant du véhicule.

Une bande de roulement peut également comprendre des découpures étroites ou incisions. Une incision a une largeur telle que les parois de matière en vis-à-vis la délimitant entrent en contact au moins partiellement l'une avec l'autre, lors du passage de la bande de roulement dans la surface de contact, dans les conditions de charge et de pression du pneumatique spécifiées par l'E.T.R.T.O et vues précédemment. Une incision ne permet pas d'évacuer l'eau, mais, vis-à-vis de l'adhérence, a un effet d'arête dans le contact au sol, qui permet en particulier de casser un film d'eau éventuellement présent sur le sol.

Pour limiter la réduction du volume de matière à user de la bande de roulement résultant de la présence de rainures et d'incisions, il a été proposé des découpures dites complexes qui permettent, par rapport à des rainures usuelles, ouvertes en totalité sur la surface de roulement, d'augmenter le volume de matière de la bande de roulement tout en respectant le volume de découpures pour un stockage de l'eau au-delà d'un seuil déterminé, quel que soit le niveau d'usure du pneumatique.

Des bandes de roulement comprenant de telles découpures complexes ont été décrites en particulier dans les documents WO2011039194, WO2011101495, WO2012130735, WO2016188956, WO2017174925, WO2019008276 et WO2019122677. Une découpure complexe débouche d'une façon discontinue, à intervalles réguliers ou non, sur la surface de roulement à neuf. Chaque découpure complexe présente des cavités externes, ouvertes sur la surface de roulement et disjointes les unes des autres dans la direction principale de la découpure complexe. La direction principale de la découpure complexe correspond souvent mais pas obligatoirement à la direction d'écoulement de l'eau dans ladite découpure lors d'un roulage sur un sol recouvert d'eau. Cette découpure complexe comprend, outre les cavités externes, des cavités internes formées à l'intérieur de la bande de roulement, non ouvertes directement sur la surface de roulement et généralement reliées à la surface de roulement par des incisions. Ces cavités internes sont positionnées radialement et totalement à l'intérieur de la surface de roulement à l'état neuf, et intercalées entre les cavités externes. Les cavités internes peuvent être positionnées à différents niveaux de profondeur dans l'épaisseur de la bande de roulement. En outre, les cavités externes et les cavités internes d'une même découpure complexe sont reliées entre elles de telle sorte que la continuité de l'écoulement d'eau dans chaque découpure complexe est assurée à tout état d'usure de la bande de roulement, comme pour une rainure continue classique. En revanche, la juxtaposition de cavités internes et externes non liées entre elles, et donc ne permettant pas un écoulement de fluide des unes vers les autres, ne constitue pas une rainure continue et n'est donc pas considérée comme une découpure complexe.

L'attention est attirée sur la divulgation du document US D 769 796 S qui montre une bande de roulement comprenant une rainure circonférentielle complexe ayant une paroi sensiblement plane.

Le volume de l'ensemble des cavités internes et des cavités externes, présents dans une bande de roulement à découpures complexes, est généralement inférieur à celui de l'ensemble des rainures, présentes dans une bande de roulement usuelle, ouvertes en totalité sur la surface de roulement à neuf et ayant une profondeur correspondant à la profondeur maximale des cavités internes ou externes. Une telle bande de roulement comprenant des découpures complexes est par conséquent plus rigide qu'une bande de roulement équivalente comprenant des rainures ouvertes classiques.

Une bande de roulement peut comporter à la fois des découpures complexes, débouchant sur la surface de roulement par intermittence, et des rainures classiques, débouchant sur la surface de roulement sur toute leur longueur. Une telle bande de roulement est montrée par exemple dans le document FR 3 099 414 A1.

Il a été constaté sur des bandes de roulement de pneumatique pour véhicule lourd, comprenant des découpures complexes circonférentielles positionnées axialement à proximité des bords de la bande de roulement, l'apparition de formes d'usure irrégulière en vague, dans la largeur et dans l'épaisseur de la bande de roulement. Ces formes d'usure irrégulière génèrent des vibrations, lors du roulage du véhicule, pouvant dégrader le confort, notamment pour les pneumatiques montés sur l'essieu directeur à l'avant du véhicule. Cette dégradation du confort en roulage peut être une cause de démontage précoce d'un pneumatique, avant son usure complète. De plus la présence de formes d'usure irrégulière peut entrainer une usure complète de certaines parties de la bande de roulement, alors que d'autres parties ne sont que partiellement usées, d'où un retrait du pneumatique avec un important volume de matière à user résiduel. Un démontage précoce de pneumatique entraine une perte économique pour l'utilisateur.

Par conséquent les inventeurs se sont donnés pour objectif d'améliorer la résistance à l'usure irrégulière d'une bande de roulement de pneumatique pour un véhicule poids lourd, comprenant des découpures circonférentielles complexes constituées par une alternance de cavités externes et de cavités internes, c'est-à-dire de retarder au maximum l'apparition des formes d'usure irrégulière sur ladite bande de roulement, en particulier sur les nervures de bord, délimitées chacune par une découpure circonférentielle complexe la plus axialement extérieure et un bord de bande de roulement.

Cet objectif a été atteint par un pneumatique pour un véhicule poids lourd comprenant une bande de roulement, destinée à entrer en contact avec un sol par l'intermédiaire d'une surface de roulement, ayant une largeur axiale, mesurée selon une direction axiale du pneumatique entre un premier et un deuxième bord de bande de roulement,
- ladite bande de roulement comprenant au moins une découpure circonférentielle complexe, délimitée par des éléments en relief, s'étendant selon une direction circonférentielle du pneumatique, et constituée, à l'état neuf du pneumatique, par une alternance de cavités externes, ouvertes sur la surface de roulement, et de cavités internes, cachées à l'intérieur de la bande de roulement, deux cavités respectivement externe et interne consécutives étant reliées entre elles,
- la au moins une découpure circonférentielle complexe ayant une largeur axiale, mesurée sur la surface de roulement entre deux parois de ladite découpure circonférentielle complexe et variable selon la direction circonférentielle,
- la au moins une découpure circonférentielle complexe ayant une seule de ses deux parois sensiblement plane, de telle sorte que l'intersection de ladite paroi avec la surface de roulement forme une trace dont l'amplitude de variation axiale est au plus égale à 2% de la largeur axiale de la bande de roulement.

Une découpure circonférentielle complexe de bande de roulement de l'état de la technique est, par définition, constituée, à l'état neuf du pneumatique, par une alternance de cavités externes, ouvertes sur la surface de roulement, et de cavités internes, cachées à l'intérieur de la bande de roulement, deux cavités respectivement externe et interne consécutives étant reliées entre elles. Il en résulte que ladite découpure circonférentielle complexe a une largeur axiale, mesurée sur la surface de roulement entre ses deux parois, variable selon la direction circonférentielle du pneumatique. Cette largeur axiale est maximale au niveau des cavités externes ouvertes sur la surface de roulement, et minimale au niveau des incisions reliant généralement à la surface de roulement les cavités internes, positionnées à l'intérieure de la bande de roulement. Cette largeur axiale variable implique que les parois de la découpure circonférentielle coupent la surface de roulement selon une trace non rectiligne, c'est-à-dire pouvant varier entre deux positions extrêmes axialement éloignées l'une de l'autre d'une distance axiale correspondant à l'amplitude de variation axiale de ladite trace. Cette trace non rectiligne génère des variations de pression de contact au bord de la nervure délimitée par ladite paroi, selon la direction circonférentielle du pneumatique, au cours du roulage du pneumatique, en particulier en lien avec les effets de Poisson en bord de nervure. Ces variations de pression favorisent l'initiation de formes d'usure irrégulière sur le bord de la nervure considérée. L'invention, en proposant de limiter l'amplitude de variation axiale de la trace, typiquement à 2% de la largeur de ma bande de roulement, de façon à obtenir une paroi sensiblement plane, c'est-à-dire très proche d'un même plan circonférentiel sur toute la circonférence du pneumatique, permet de diminuer de façon sensible les variations de pression en bord de nervure, et donc le risque d'initiation de formes d'usure irrégulière.

Préférentiellement la paroi sensiblement plane de la au moins une découpure circonférentielle complexe est strictement plane, de telle sorte que l'intersection de ladite paroi avec la surface de roulement forme une trace dont l'amplitude de variation axiale est nulle. En d'autres termes, la trace de la paroi est strictement rectiligne et la paroi est contenue dans un plan circonférentiel. Cette configuration permet de limiter au maximum les variations de pression de contact selon la direction circonférentielle, en bord de la nervure délimitée par ladite paroi.

Selon un mode de réalisation préféré, la au moins une découpure circonférentielle complexe ayant une seule de ses deux parois sensiblement plane est une découpure circonférentielle complexe de bord, axialement la plus à l'extérieur de la bande roulement, c'est-à-dire la plus éloignée d'un plan circonférentiel médian perpendiculaire à l'axe de rotation du pneumatique et passant par le milieu de la bande de roulement. La présence d'une paroi sensiblement plane sur une découpure circonférentielle complexe de bord, délimitant axialement vers l'intérieur une nervure dite intermédiaire et axialement vers l'extérieure une nervure de bord, est en effet particulièrement intéressante dans cette zone de la bande de roulement particulièrement sensible aux formes d'usure irrégulière.

Selon une variante préférée du mode de réalisation préféré précédemment décrit, la paroi sensiblement plane de la au moins une découpure circonférentielle complexe de bord est la paroi la plus axialement extérieure. La paroi la plus axialement extérieure de la découpure circonférentielle complexe de bord délimite la nervure de bord, généralement particulièrement sensible à l'apparition de formes d'usure irrégulière, en raison de son positionnement axial au moins en partie extérieur à l'armature de sommet et des efforts généralement freineurs s'exerçant sur cette nervure de bord.

Avantageusement la nervure de bord, délimitée par ladite découpure circonférentielle complexe de bord et un bord de bande de roulement, a une largeur axiale au plus égale à 25% de la largeur axiale de la bande de roulement. Au-delà de cette valeur, la découpure circonférentielle complexe de bord, délimitant ladite nervure de bord, n'est plus une découpure de bord, du fait de sa faible distance axiale par rapport au plan circonférentiel du pneumatique, au plus égale à 30% de la bande de roulement. Par conséquent elle ne peut plus assurer les fonctions d'adhérence et de refroidissement du sommet du pneumatique attendues

Encore avantageusement, la nervure de bord, délimitée par ladite découpure circonférentielle complexe de bord et un bord de bande de roulement, a une largeur axiale au moins égale à 5% de la largeur axiale de la bande de roulement. En deçà de cette valeur, la nervure de bord, du fait de sa faible largeur axiale, est plus sensible aux arrachements, en particulier sous l'action des efforts transversaux exercés sur la bande de roulement.

Selon un mode de réalisation particulier, la bande de roulement comprend au moins trois, de préférence au moins cinq découpures circonférentielles complexes positionnées entre les deux découpures circonférentielles complexes de bord. Un nombre suffisamment élevé de nervures garantit une bonne adhérence transversale, du fait de la présence d'un nombre élevé d'arêtes transversales, et l'endurance du sommet, du fait du refroidissement du sommet par un nombre important de découpures.

Les caractéristiques de l'invention sont illustrées par les figures 1 à 4 schématiques et non représentées à l'échelle :
- Figure 1 : Vue de dessus d'une bande de roulement d'un pneumatique selon l'invention, avec des découpures circonférentielles de bord comprenant une paroi axialement extérieure plane,
- Figure 2 : Vue de dessus d'une portion de bord de bande de roulement d'un pneumatique selon l'invention, avec des découpures circonférentielles de bord comprenant une paroi axialement extérieure plane,
- Figure 3 : Vue en coupe méridienne B-B', dans un plan méridien YZ, d'une découpure circonférentielle complexe de bord comprenant une paroi axialement extérieure plane, au niveau d'une cavité externe,
- Figure 4 : Vue en coupe méridienne C-C', dans un plan méridien YZ, d'une découpure circonférentielle complexe de bord comprenant une paroi axialement extérieure plane, au niveau d'une cavité interne.

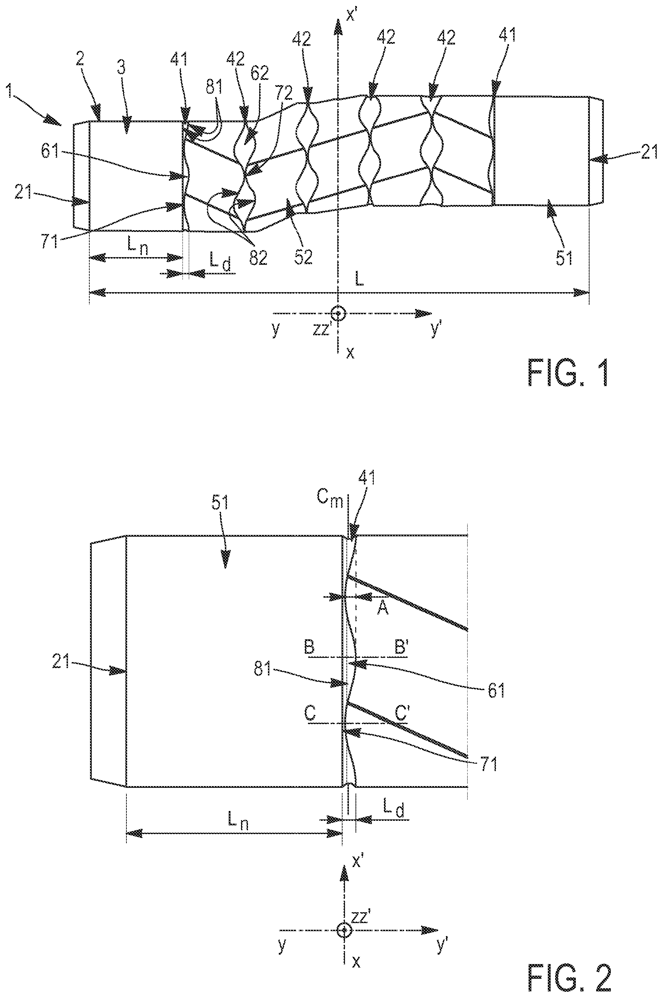

La figure 1 est une vue de dessus d'une bande de roulement 2 d'un pneumatique 1 selon l'invention. La bande de roulement 2, destinée à entrer en contact avec un sol par l'intermédiaire d'une surface de roulement 3, a une largeur axiale L, mesurée selon une direction axiale YY' du pneumatique entre un premier et un deuxième bord de bande de roulement 21. Ladite bande de roulement 2 comprend six découpures circonférentielles complexes (41, 42), délimitées chacune par des éléments en relief (51, 52), s'étendant selon une direction circonférentielle XX' du pneumatique, et constituées chacune, à l'état neuf du pneumatique, par une alternance de cavités externes (61, 62), ouvertes sur la surface de roulement 3, et de cavités internes (71, 72), cachées à l'intérieur de la bande de roulement 2, deux cavités respectivement externe (61, 62) et interne (71, 72) consécutives étant reliées entre elles. Parmi les six découpures circonférentielles complexes (41, 42), deux d'entre elles sont des découpures circonférentielles complexes de bord 41, axialement les plus à l'extérieur de la bande roulement 2, c'est-à-dire les plus éloignées d'un plan circonférentiel médian XZ perpendiculaire à l'axe de rotation du pneumatique et passant par le milieu de la bande de roulement 2, et quatre d'entre elles sont des découpures circonférentielles complexes intermédiaires 42. Chaque découpure circonférentielle complexe (41, 42), qu'elle soit de bord ou intermédiaire, a une largeur axiale Ld, mesurée sur la surface de roulement 3 entre deux parois (81, 82) de ladite découpure circonférentielle complexe (41, 42) et variable selon la direction circonférentielle XX'. Dans le mode de réalisation présenté sur la figure 1, chacune des deux découpures circonférentielles complexes de bord 41 a une paroi 81 axialement extérieure strictement plane, de telle sorte que l'intersection de ladite paroi 81 avec la surface de roulement 3 forme une trace 811 rectiligne, c'est-à-dire dont l'amplitude de variation axiale A est nulle. En outre la nervure de bord 51, délimitée par ladite découpure circonférentielle complexe de bord 41 et un bord de bande de roulement 21, a une largeur axiale Ln au moins égale à 5% et au plus égale à 25% de la largeur axiale L de la bande de roulement 2.

La figure 2 est une vue de dessus détaillant une portion de bord de bande de roulement d'un pneumatique selon le mode de réalisation de la figure 1. Comme vu dans la description de la figure 1, la découpure circonférentielle complexe de bord 41 a une paroi 81 axialement extérieure strictement plane, avec une trace 811 sur la surface de roulement 3 strictement rectiligne. En outre la découpure circonférentielle complexe de bord 41 a une paroi 81 axialement intérieure non sensiblement plane, de telle sorte que l'intersection de ladite paroi 81 avec la surface de roulement 3 forme une trace 811 ondulée, dont l'amplitude de variation axiale A est strictement supérieure à 2% de la largeur axiale L de la bande de roulement 2. Par conséquent, la découpure circonférentielle complexe de bord 41 est dissymétrique par rapport à sa ligne circonférentielle moyenne Cm.

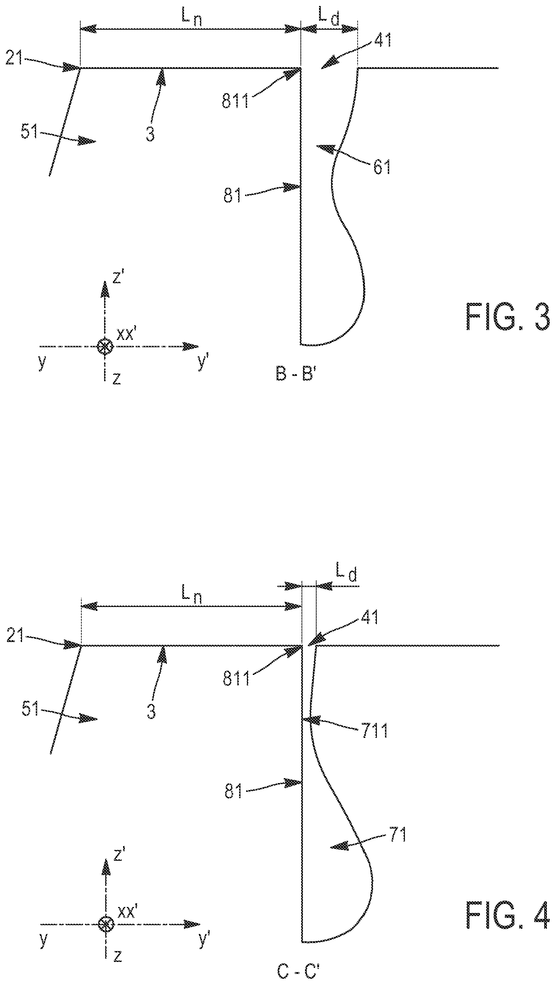

La figure 3 est une vue en coupe méridienne B-B', dans un plan méridien YZ, d'une découpure circonférentielle complexe de bord 41 comprenant une paroi 81 axialement extérieure plane, au niveau d'une cavité externe 61, ouverte sur la surface de roulement 3. La paroi 81 coupe la surface de roulement 3 selon une trace 811. La découpure circonférentielle complexe de bord 41 a une largeur axiale Ld et délimite axialement vers l'intérieur une nervure de bord 51, celle-ci étant délimitée axialement vers l'extérieur par un bord de bande de roulement 21.

La figure 4 est une vue en coupe méridienne C-C', dans un plan méridien YZ, d'une découpure circonférentielle complexe de bord 41 comprenant une paroi 81 axialement extérieure plane, au niveau d'une cavité interne 71, non directement ouverte sur la surface de roulement 3 et reliée à celle-ci par une incision 711.

Les inventeurs ont plus particulièrement étudié cette invention pour un pneumatique de dimension 315/70 R22.5, destiné à équiper un essieu directeur pour un véhicule poids lourd et ayant une capacité de charge de 4000 kg pour une pression de gonflage égale à 9 bars.

Le tableau 1 ci-dessous présente les caractéristiques comparées d'un pneumatique selon l'invention I et d'un pneumatique de référence R :

**[Tableau 1]**

| **Caractéristiques** | **R** | **I** | **Commentaires** |
|---|---|---|---|
| Largeur L de la bande de roulement | 269 mm | 269 mm | |
| Nombre de découpures circonférentielles complexes | 0 | 6 | Pneumatique de référence R ayant des découpures circonférentielles ouvertes |
| Type de découpures circonférentielles complexes ayant une seule de ses deux parois sensiblement plane (bord, intermédiaire) | NA | 2 | Deux découpures circonférentielles complexes de bord 41 ayant une paroi 81 la plus axialement extérieure plane |
| Amplitude de variation axiale A de la paroi sensiblement plane 81 | NA | 0 mm | Paroi 81 strictement plane |
| Largeur axiale Ln de la nervure de bord 51 | 55 mm | 50 mm | Ln/L=19%, compris entre 5% et 25% |

## Revendications

1. Pneumatique (1) pour un véhicule poids lourd comprenant une bande de roulement (2), destinée à entrer en contact avec un sol par l'intermédiaire d'une surface de roulement (3), ayant une largeur axiale (L), mesurée selon une direction axiale (YY') du pneumatique entre un premier et un deuxième bord de bande de roulement (21),
- ladite bande de roulement (2) comprenant au moins une découpure circonférentielle complexe (41, 42), délimitée par des éléments en relief (51, 52), s'étendant selon une direction circonférentielle (XX') du pneumatique, et constituée, à l'état neuf du pneumatique, par une alternance de cavités externes (61, 62), ouvertes sur la surface de roulement (3), et de cavités internes (71, 72), cachées à l'intérieur de la bande de roulement (2), deux cavités respectivement externe (61, 62) et interne (71, 72) consécutives étant reliées entre elles,
- la au moins une découpure circonférentielle complexe (41, 42) ayant une largeur axiale (Ld), mesurée sur la surface de roulement (3) entre deux parois (81, 82) de ladite découpure circonférentielle complexe (41, 42) et variable selon la direction circonférentielle (XX'),
**caractérisé en ce qu'**au moins une découpure circonférentielle complexe (61, 62) a une seule de ses deux parois (81, 82) sensiblement plane, de telle sorte que l'intersection de ladite paroi (81, 82) avec la surface de roulement (3) forme une trace (811, 821) dont l'amplitude de variation axiale (A) est au plus égale à 2% de la largeur axiale (L) de la bande de roulement (3).

2. Pneumatique (1) selon la revendication 1, **dans lequel** la paroi (81, 82) sensiblement plane de la au moins une découpure circonférentielle complexe (61, 62) est strictement plane, de telle sorte que l'intersection de ladite paroi (81, 82) avec la surface de roulement (3) forme une trace (811, 821) dont l'amplitude de variation axiale (A) est nulle.

3. Pneumatique (1) selon l'une des revendications 1 ou 2, **dans lequel** la au moins une découpure circonférentielle complexe (61, 62) ayant une seule de ses deux parois (81, 82) sensiblement plane est une découpure circonférentielle complexe de bord (61), axialement la plus à l'extérieur de la bande roulement (2), c'est-à-dire la plus éloignée d'un plan circonférentiel médian (XZ) perpendiculaire à l'axe de rotation du pneumatique et passant par le milieu de la bande de roulement (2).

4. Pneumatique (1) selon la revendication 3, **dans lequel** la paroi (81) sensiblement plane de la au moins une découpure circonférentielle complexe de bord (61) est la paroi la plus axialement extérieure (81).

5. Pneumatique (1) selon la revendication 4, **dans lequel** la nervure de bord (51), délimitée par ladite découpure circonférentielle complexe de bord (61) et un bord de bande de roulement (21), a une largeur axiale (Ln) au plus égale à 25% de la largeur axiale (L) de la bande de roulement (2).

6. Pneumatique (1) selon l'une des revendications 4 ou 5, **dans lequel** la nervure de bord (51), délimitée par ladite découpure circonférentielle complexe de bord (61, 62) et un bord de bande de roulement (21, 22), a une largeur axiale (Ln) au moins égale à 5% de la largeur axiale (L) de la bande de roulement (2).

7. Pneumatique (1) selon l'une quelconque des revendications 1 à 6, **dans lequel** la bande de roulement (2) comprend au moins trois, de préférence au moins cinq découpures circonférentielles complexes (62) positionnées entre les deux découpures circonférentielles complexes de bord (61).

## Patentansprüche

1. Reifen (1) für ein Schwerlastfahrzeug, umfassend einen Laufstreifen (2), der dazu bestimmt ist, über eine Lauffläche (3) mit einem Boden in Kontakt zu gelangen, aufweisend eine axiale Breite (L), gemessen entlang einer axialen Richtung (YY') des Reifens zwischen einem ersten und einem zweiten Laufstreifenrand (21),
- wobei der Laufstreifen (2) mindestens einen komplexen umfänglichen Ausschnitt (41, 42) umfasst, der durch erhabene Elemente (51, 52) begrenzt wird, die sich entlang einer Umfangsrichtung (XX') des Reifens erstrecken, und im Neuzustand des Reifens durch eine Wechselfolge von äußeren Kavitäten (61, 62), die an der Lauffläche (3) offen sind, und inneren Kavitäten (71, 72), die im Inneren des Laufstreifens (2) verborgen sind, besteht, wobei zwei aufeinander folgende äußere (61, 62) beziehungsweise innere Kavitäten (71, 72) untereinander verbunden sind,
- wobei der mindestens eine komplexe umfängliche Ausschnitt (41, 42) eine axiale Breite (Ld) aufweist, die an der Lauffläche (3) zwischen zwei Wänden (81, 82) des komplexen umfänglichen Ausschnitts (41, 42) gemessen wird und entlang der Umfangsrichtung (XX') variabel ist,
**dadurch gekennzeichnet, dass** bei mindestens einem komplexen umfänglichen Ausschnitt (61, 62) nur eine seiner beiden Wände (81, 82) im Wesentlichen eben ist, so dass der Schnittpunkt der Wand (81, 82) mit der Lauffläche (3) eine Linie (811, 821) bildet, deren axiale Variationsamplitude (A) höchstens 2 % der axialen Breite (L) des Laufstreifens (3) beträgt.

2. Reifen (1) nach Anspruch 1, wobei die im Wesentlichen ebene Wand (81, 82) des mindestens einen komplexen umfänglichen Ausschnitts (61, 62) strikt eben ist, so dass der Schnittpunkt der Wand (81, 82) mit der Lauffläche (3) eine Linie (811, 821) bildet, deren axiale Variationsamplitude (A) null ist.

3. Reifen (1) nach einem der Ansprüche 1 oder 2, wobei der mindestens eine komplexe umfängliche Ausschnitt (61, 62), bei dem nur eine seiner beiden Wände (81, 82) im Wesentlichen eben ist, ein komplexer umfänglicher Randausschnitt (61) ist, der der axial äußerste des Laufstreifens (2) ist, das heißt, am weitesten von einer umfänglichen Mittelebene (XZ), die senkrecht zu der Rotationsachse des Reifens und durch die Mitte des Laufstreifens (2) verläuft, entfernt ist.

4. Reifen (1) nach Anspruch 3, wobei die im Wesentlichen ebene Wand (81) des mindestens einen komplexen umfänglichen Randausschnitts (61) die axial äußerste Wand (81) ist.

5. Reifen (1) nach Anspruch 4, wobei die Randrippe (51), die durch den komplexen umfänglichen Randausschnitt (61) und einen Laufstreifenrand (21) begrenzt wird, eine axiale Breite (Ln) von höchstens 25 % der axialen Breite (L) des Laufstreifens (2) hat.

6. Reifen (1) nach einem der Ansprüche 4 oder 5, wobei die Randrippe (51), die durch den komplexen umfänglichen Randausschnitt (61, 62) und einen Laufstreifenrand (21, 22) begrenzt wird, eine axiale Breite (Ln) von mindestens 5 % der axialen Breite (L) des Laufstreifens (2) hat.

7. Reifen (1) nach einem der Ansprüche 1 bis 6, wobei der Laufstreifen (2) mindestens drei, vorzugsweise mindestens fünf, komplexe umfängliche Ausschnitte (62) umfasst, die zwischen den beiden komplexen umfänglichen Randausschnitten (61) angeordnet sind.

## Claims

1. Tyre (1) for a heavy-duty vehicle comprising a tread (2), intended to come into contact with the ground via a tread surface (3), having an axial width (L), measured in an axial direction (YY') of the tyre between a first and a second tread edge (21),
- said tread (2) comprising at least one complex circumferential cut (41, 42), delimited by raised elements (51, 52), extending in a circumferential direction (XX') of the tyre, and consisting, when the tyre is new, of an alternation of external cavities (61, 62), which open onto the tread surface (3), and of internal cavities (71, 72), which are hidden inside the tread (2), two consecutive external cavities (61, 62) and internal cavities (71, 72), respectively, being interconnected,
- the at least one complex circumferential cut (41, 42) having an axial width (Ld), measured on the tread surface (3) between two walls (81, 82) of said complex circumferential cut (41, 42) and variable in the circumferential direction (XX'),
**characterized in that** at least one complex circumferential cut (61, 62) has only one of its two walls (81, 82) substantially planar, such that the intersection of said wall (81, 82) with the tread surface (3) forms a line (811, 821) the amplitude of axial variation (A) of which is at most equal to 2% of the axial width (L) of the tread (3).

2. Tyre (1) according to Claim 1, **wherein** the substantially planar wall (81, 82) of the at least one complex circumferential cut (61, 62) is strictly planar, such that the intersection of said wall (81, 82) with the tread surface (3) forms a line (811, 821) the amplitude of axial variation (A) of which is zero.

3. Tyre (1) according to either of Claims 1 and 2, **wherein** the at least one complex circumferential cut (61, 62) having only one of its two walls (81, 82) substantially planar is an axially outermost complex circumferential edge cut (61) of the tread (2), that is to say the furthest from a median circumferential plane (XZ) perpendicular to the axis of rotation of the tyre and passing through the middle of the tread (2).

4. Tyre (1) according to Claim 3, **wherein** the substantially planar wall (81) of the at least one complex circumferential edge cut (61) is the axially outermost wall (81).

5. Tyre (1) according to Claim 4, **wherein** the edge rib (51), delimited by said complex circumferential edge cut (61) and a tread edge (21), has an axial width (Ln) at most equal to 25% of the axial width (L) of the tread (2).

6. Tyre (1) according to either of Claims 4 and 5, **wherein** the edge rib (51), delimited by said complex circumferential edge cut (61, 62) and a tread edge (21, 22), has an axial width (Ln) at least equal to 5% of the axial width (L) of the tread (2).

7. Tyre (1) according to any one of Claims 1 to 6, **wherein** the tread (2) comprises at least three, preferably at least five, complex circumferential cuts (62) positioned between the two complex circumferential edge cuts (61).
